# FASCICULE DE BREVET EUROPEEN

(11) **EP 3 326 447 B1**
(45) Date de publication et mention de la délivrance du brevet: **12.06.2019**
(21) Numéro de dépôt: 17200170.3
(22) Date de dépôt: 06.11.2017
(51) Int. Cl.: A01D 46/00, A01D 90/00, B60P 3/00

(54) **VEHICULE DE TRANSPORT DE CHARGE LIQUIDE/SOLIDE ET NOTAMMENT VEHICULE TRACTE OU AUTOPORTE POUR LE TRANSPORT DE VENDANGE**
TRANSPORTFAHRZEUG FÜR FLÜSSIGE/FESTE LADUNG, UND INSBESONDERE GEZOGENES ODER SELBSTFAHRENDES FAHRZEUG FÜR DEN TRANSPORT VON LESEGUT
VEHICLE FOR TRANSPORTING LIQUID/SOLID LOADS AND ESPECIALLY TOWED OR SELF-SUPPORTED VEHICLE FOR TRANSPORTING GRAPES

(30) Priorité: 23.11.2016 FR 1661399; 23.11.2016 FR 1661401
(43) Date de publication de la demande: 30.05.2018
(73) Titulaire: Bucher Vaslin, 49290 Chalonnes sur Loire (FR)
(72) Inventeur: ESPIAU, Pascal, 66510 SAINT HIPPOLYTE (FR)
(74) Mandataire: Godineau, Valérie

(56) Documents cités:
- EP-A1- 1 388 459
- EP-A2- 2 923 887
- FR-A1- 2 920 267
- US-A- 4 175 906

## Description

### DOMAINE DE L'INVENTION

L'invention concerne, de manière générale, un véhicule de transport de charge liquide/solide et notamment un véhicule tracté ou autoporté pour le transport de vendange. Elle concerne plus particulièrement un véhicule de transport de charge liquide/solide comprenant un châssis roulant et une benne basculante portée par le châssis roulant.

### ART ANTÉRIEUR

Les véhicules de transport de charge liquide/solide, et en particulier de vendange, destinés par exemple à recueillir le raisin cueilli dans les vignes et à le décharger dans des trémies de réception installées dans des caves, lesquelles servent à alimenter la cuverie de fermentation, sont connus, comme l'illustrent par exemple le brevet FR 2 533 868 ou la demande européenne EP 1 388 459.

La phase de transport de la vendange est souvent préjudiciable à la vendange, car elle entraîne une production de jus libre avec un risque d'oxydation des jus. En effet, ces jus macèrent avec la pellicule de raisin et s'oxydent. Cette production de jus libre est due au déplacement de la charge sur des profils de terrains vinicoles et aux départs et arrêts fréquents du véhicule.

Pour limiter cette oxydation, l'opérateur ajoute un produit antioxydant, généralement du dioxyde de souffre, à la vendange. Le mode de traitement antioxydant consiste à déverser une solution diluée directement sur la vendange. L'antioxydant protège le jus, mais en contrepartie, il favorise l'extraction de composés non souhaités de la pellicule vers le jus.

De plus, pour protéger convenablement les jus, l'opérateur doit surestimer la quantité d'antioxydant, du fait de l'approximation de la masse de vendange dans la benne, et d'une fixation de l'antioxydant sur les pellicules du raisin.

D'autres types de véhicules de transport de charge liquide/solide existent comme l'illustre la demande de brevet EP-2.923.87.

### BUTS ET RÉSUMÉ

Un but de l'invention est de proposer un véhicule de transport du type précité dont la conception permet de réduire les risques d'oxydation des jus libres par macération avec les pellicules de raisin.

Un autre but de l'invention est de proposer un véhicule de transport du type précité dont la conception permet d'augmenter le volume de stockage des jus sans compliquer la mécanique d'entraînement en déplacement de la benne.

Un autre but de l'invention est de proposer un véhicule de transport de charge dont la conception permet de vidanger de manière synchrone ou asynchrone la benne et la ou les cuves.

À cet effet, l'invention a pour objet un véhicule de transport de charge liquide/solide, notamment de vendange, comprenant un châssis roulant et une benne basculante portée par le châssis roulant, ladite benne étant une benne basculante entre deux positions extrêmes correspondant l'une, dite première position, à la position de stockage de charge de la benne, l'autre, dite deuxième position, à la position de vidage de charge de la benne, caractérisé en ce que le châssis roulant est équipé d'une ou plusieurs cuves de récupération des liquides, en ce que la benne est indépendante en déplacement à basculement de la ou les cuves équipant le châssis roulant, et en ce que le véhicule comprend des moyens de liaison configurés pour permettre le raccordement de la, ou d'au moins l'une, de préférence de chaque cuve équipant le châssis roulant à la benne par une liaison fluidique au moins en première position de stockage de charge de la benne.

La présence de moyens de liaison entre benne et cuve(s) permet un transfert d'au moins une partie du contenu de la benne vers la ou les cuves.

La possibilité d'entraîner en mouvement la benne sans entraîner en mouvement la ou les cuves permet, par exemple, de vidanger la benne sans vidanger la ou les cuves et inversement.

L'absence d'entraînement en déplacement de la ou les cuves lors d'un entraînement en déplacement de la benne, la ou les cuves restant en position sur le châssis roulant, permet d'augmenter la capacité de stockage du véhicule sans compliquer la mécanique d'entraînement en déplacement de la benne. Il en résulte la possibilité de séparer de manière rapide et efficace une plus grande quantité de jus libre.

Selon un mode de réalisation de l'invention, le fond de la benne est muni d'au moins un organe de drainage ou de filtration formant une zone de transit obligatoire du contenu de la benne avant accès à la ou au moins l'une des liaisons fluidiques benne/cuve.

La présence de drains permet une séparation et une collecte plus rapides et plus efficaces des jus.

Selon un mode de réalisation de l'invention, la ou au moins l'une des liaisons fluidiques entre cuve et benne est une liaison souple et/ou munie d'un raccord apte à permettre une déconnexion de la benne de la ou des cuves.

Cette configuration de la liaison permet un déplacement aisé de la benne sans incidence sur la ou les cuves.

Selon un mode de réalisation de l'invention, la ou au moins l'une des liaisons fluidiques entre cuve et benne est une liaison obturable munie d'au moins un organe d'obturation et en ce que le ou au moins l'un des organes d'obturation de la liaison fluidique est un organe mobile configuré pour passer d'une position correspondant à une position d'ouverture de la liaison fluidique à une position correspondant à une position de fermeture de la liaison fluidique en parallèle du passage de la benne basculante de la première position de stockage de charge à la deuxième position de vidage de charge.

Selon un mode de réalisation de l'invention, la ou au moins l'une des liaisons fluidiques obturables entre cuve et benne comprend un premier tronçon de conduit solidaire en déplacement de la benne et un deuxième tronçon de conduit porté par la cuve, en ce que le premier tronçon de conduit est configuré pour s'insérer partiellement dans le deuxième tronçon de conduit au moins en première position de stockage de charge de la benne et en ce que l'organe d'obturation ou au moins l'un des organes d'obturation de la liaison fluidique obturable est disposé dans le deuxième tronçon de conduit, cet organe d'obturation étant équipé de moyens de rappel en position fermée et étant configuré pour passer de la position fermée à la position ouverte sous l'action d'une poussée exercée par le premier tronçon de conduit à l'état partiellement introduit du premier tronçon de conduit dans le deuxième tronçon de conduit.

Selon un mode de réalisation, dans lequel le véhicule comprend une cuve équipant le châssis roulant, le volume total de stockage de liquide correspondant au volume de liquide apte à être stocké à l'aide de la cuve équipant le châssis roulant est compris entre 15 % du volume intérieur total de la benne et le volume intérieur total de la benne.

Il en résulte la possibilité de stocker une quantité importante de jus dans la cuve.

Selon un mode de réalisation, dans lequel le véhicule comprend une pluralité de cuves équipant le châssis roulant, le volume total de stockage de liquide correspondant au volume de liquide apte à être stocké à l'aide de la pluralité de cuves équipant le châssis roulant est compris entre 15 % du volume intérieur total de la benne et le volume intérieur total de la benne.

À nouveau, il en résulte la possibilité de stocker une quantité importante de jus dans les cuves.

Selon un mode de réalisation, la benne est munie intérieurement d'au moins une série de volets, lesdits volets de la ou d'au moins l'une des séries de volets étant montés à pivotement autour d'axes parallèles, dits horizontaux, entre une position fermée dans laquelle ils forment un plancher disposé au-dessus du fond de la benne et divisent au moins une partie du volume intérieur de la benne en un compartiment inférieur et un compartiment supérieur et au moins une position ouverte dans laquelle l'accès à la partie du fond de la benne surmontée par les volets est autorisé.

La présence de volets permet de limiter l'écrasement des baies en limitant la hauteur de chaque niveau de stockage, et donc la hauteur des couches de matière stockée.

Cette limitation de la hauteur des couches favorise également la circulation des jus libres à l'intérieur des couches, et donc la récupération des jus. La présence de ces volets peut permettre également une séparation en lots différents de la vendange et/ou des jus.

Selon un mode de réalisation de l'invention, les volets sont munis d'au moins une ouverture traversante s'étendant en position fermée des volets, de préférence à l'aplomb d'un organe de drainage ou de filtration.

Cette disposition permet de faciliter la collecte des jus libres et d'éviter une dispersion des jus libres d'un étage à l'étage inférieur.

Selon un mode de réalisation de l'invention, les volets présentent une position ouverte dans laquelle les volets s'étendent, sur au moins 2/3 de leur hauteur, au-dessus du plancher formé en position fermée desdits volets.

Grâce à cette disposition, les volets peuvent être utilisés comme guides lors du déversement de la vendange dans la benne.

Selon un mode de réalisation de l'invention, les volets présentent une position ouverte dans laquelle les volets s'étendent, sur au moins 2/3 de leur hauteur, au-dessous du plancher formé en position fermée desdits volets.

Grâce à cette disposition, les volets peuvent être utilisés comme volets séparateurs pour une collecte en lots de la vendange.

Selon un mode de réalisation de l'invention, le véhicule de transport de charge liquide/solide comprend un réservoir, un circuit de circulation de fluide entre ledit réservoir et la ou au moins l'une des cuves équipant le châssis roulant et une pompe apte à permettre le transfert du contenu du réservoir dans la ou au moins l'une des cuves via ledit circuit de circulation de fluide.

Grâce à cette disposition, il est possible de traiter aisément les jus collectés.

Selon un mode de réalisation de l'invention, la benne, qui comprend des parois latérales jouxtant le fond de la benne, est équipée d'injecteurs de fluide, tels que du gaz carbonique, chaque injecteur étant disposé au niveau d'une paroi latérale de la benne.

La présence d'injecteurs permet la circulation de fluide d'inertage et/ou de refroidissement à l'intérieur de la vendange.

Selon un mode de réalisation de l'invention, le véhicule de transport de charge liquide/solide est équipé de moyens de vibration de la benne.

Les moyens de vibration de la benne facilitent la vidange de la benne.

Selon un mode de réalisation de l'invention, la ou au moins l'une, de préférence chaque liaison fluidique entre cuve et benne est configurée pour permettre un écoulement gravitaire entre benne et cuve.

### BRÈVE DESCRIPTION DES DESSINS

L'invention sera bien comprise à la lecture de la description suivante d'exemples de réalisation, en référence aux dessins annexés dans lesquels :

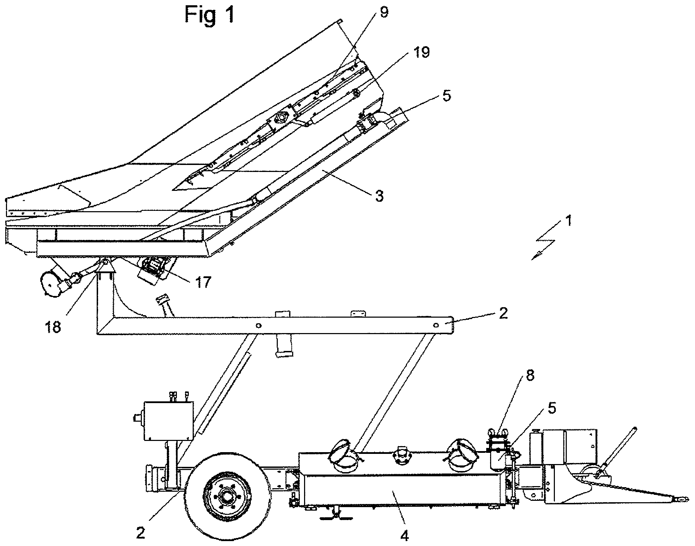

- La figure 1 représente une vue de côté d'une benne en position haute et basculée de la benne.

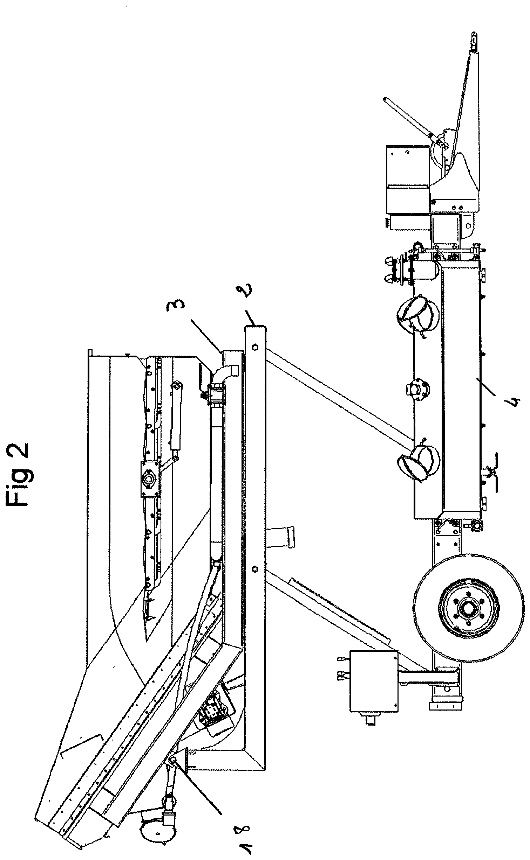

- La figure 2 représente une vue de côté d'une benne en position haute et non basculée de la benne.
- La figure 3 représente une vue de côté d'une benne en position basse et non basculée, dite de transport, de la benne en position partiellement ouverte des volets.
- Les figures 3A à 3C représentent, sous forme de vues partielles en coupe, le passage de l'organe d'obturation d'une liaison fluidique entre cuve et benne d'une position fermée à une position ouverte sous l'action d'un déplacement de la benne de la position de vidage de charge de la benne à la position de stockage de charge de la benne.
- La figure 4 représente une vue prise de dessus de la benne.
- La figure 5 représente une autre vue prise de dessus de la benne.

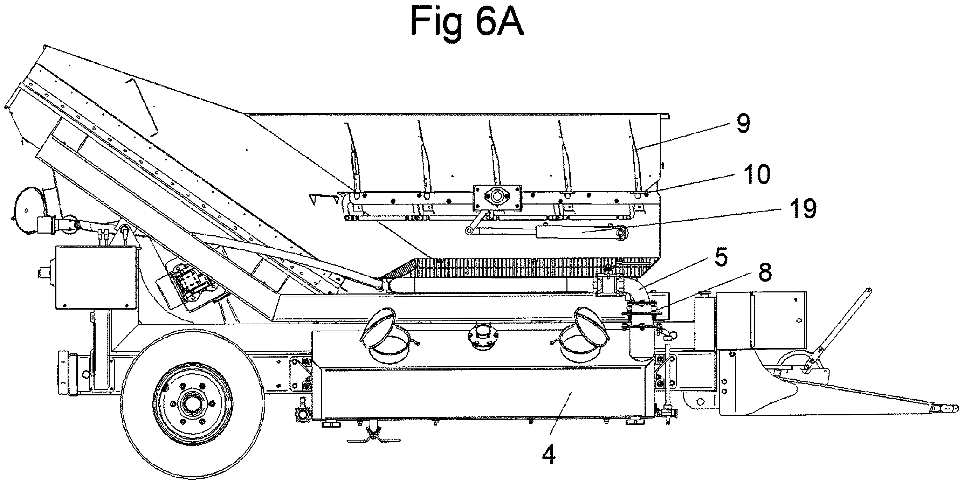

- La figure 6A représente une vue de côté de la benne illustrant la liaison fluidique entre benne et cuve.

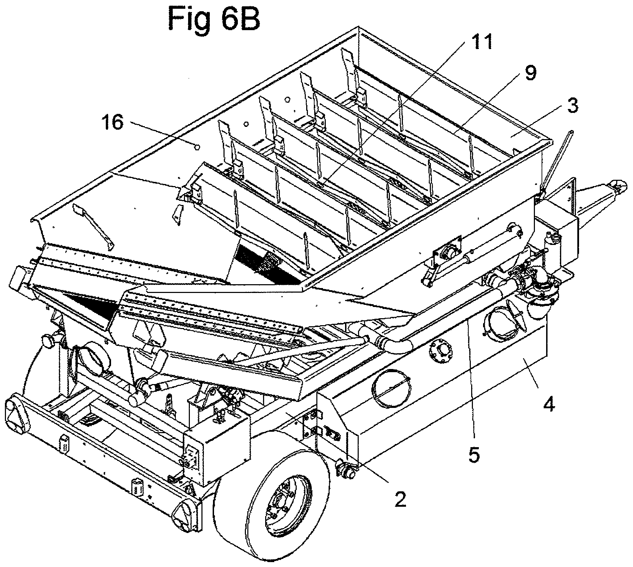

- La figure 6B représente une vue en perspective du véhicule pris sous un autre angle.

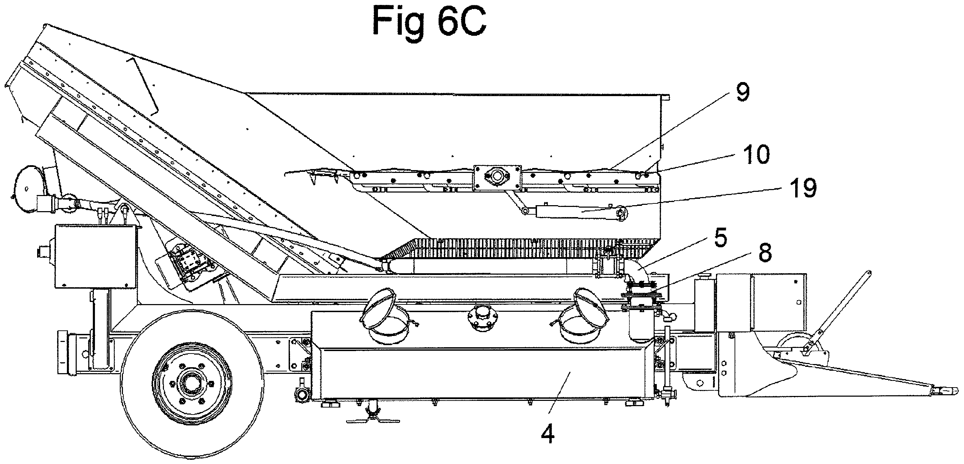

- La figure 6C représente une vue de côté dudit véhicule, en position fermée des volets.

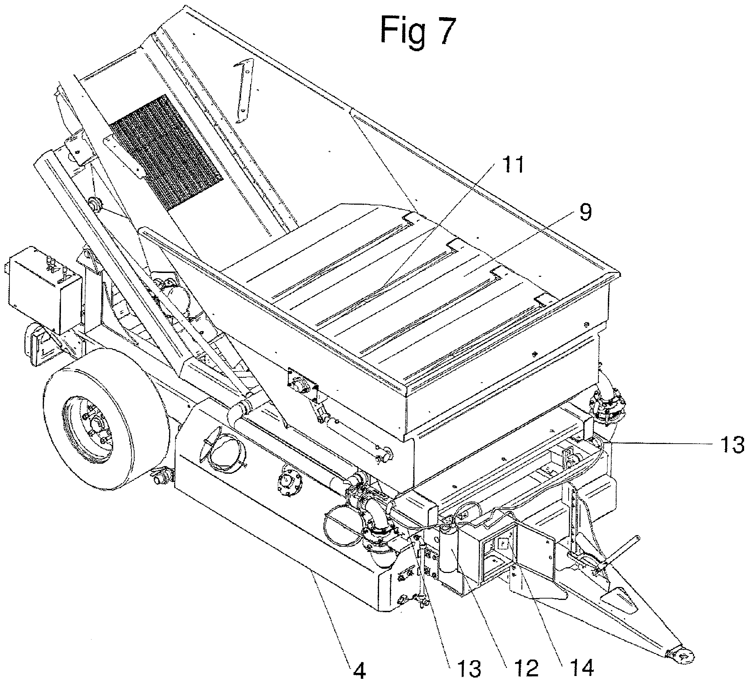

- La figure 7 représente une vue en perspective du véhicule, en position fermée des volets.
- La figure 8 représente deux vues schématiques partielles illustrant les volets, en position ouverte (vue supérieure) et en position fermée (vue inférieure).

### DESCRIPTION DÉTAILLÉE

Comme mentionné ci-dessus, l'invention a pour objet un véhicule 1 de transport de charge liquide/solide, plus particulièrement destiné ici au transport de vendange, même s'il peut s'appliquer à tout type de charge contenant des jus et des parties solides, comme tous les fruits à jus par exemple ou autres.

Ce véhicule 1 comprend un châssis 2 roulant et une benne 3 portée par ledit châssis 2 roulant.

Le châssis 2 roulant représenté ici est un châssis 2 élévateur, traditionnellement sur roues, tracté. Ce châssis 2 comprend une plateforme élévatrice reliée au corps de base du châssis par deux bras parallèles élévateurs, couplés à pivotement à la plateforme et au corps de base du châssis, et délimitant avec le corps du châssis et la plateforme, un parallélogramme déformable sous l'action d'un vérin d'entraînement en déplacement à pivotement desdits bras.

La benne 3 est une benne basculante entre deux positions extrêmes, A cet effet, la benne 3 est couplée à la plateforme du châssis par une liaison 18 pivot d'axe dit horizontal, parallèle au plan d'appui au sol du châssis. Cette benne 3 est entraînée en déplacement à pivotement autour de sa liaison 18 pivot par l'intermédiaire d'un actionneur, tel qu'un vérin, pour passer d'une première position, dite horizontale, de stockage de la charge à une deuxième position, dite inclinée, de vidage de la charge. Ce vérin est disposé entre la plateforme et la benne et n'a pas été représenté, pour ne pas alourdir la figure.

Le châssis 2 aurait pu, de manière équivalente, être réalisé non élévateur, la benne étant couplée à pivotement directement au corps de base du châssis.

Le châssis 2 est équipé d'au moins une cuve 4 de collecte des jus. Dans les exemples représentés, le châssis comporte deux cuves 4 s'étendant chacune le long d'un bord longitudinal du châssis, le châssis étant équipé le long de l'un de ses bords transversaux, d'un attelage.

La benne 3 comporte quant à elle un fond 6 et des parois 15 latérales jouxtant le fond 6 de la benne.

L'une des parois 15 latérales de la benne 3 est inclinée pour faciliter la vidange de la benne 3 de manière en soi connue.

La benne 3 est raccordable à chacune des cuves 4 équipant le châssis 2 roulant par une liaison 5 fluidique. A cet effet, le véhicule comprend des moyens de liaison configurés pour permettre le raccordement de la, ou d'au moins l'une, de préférence de chaque, cuve 4 équipant le châssis 2 roulant à la benne 3 par une liaison 5 fluidique au moins en première position de stockage de charge de la benne 3. La liaison 5 fluidique entre la benne 3 et une cuve 4 est formée par un conduit qui s'étend entre le fond de la benne et ladite cuve. Ce conduit peut être formé d'un ou plusieurs tronçons de conduit.

Chaque liaison 5 fluidique est ici configurée pour permettre un écoulement gravitaire entre benne 3 et cuve 4.

Le conduit de la liaison 5 fluidique peut être équipé d'un raccord 8 pour permettre une déconnexion de la benne 3 de la cuve 4. Il est ainsi possible d'entraîner à pivotement la benne 3, sans endommager la liaison entre benne 3 et cuve 4.

En variante, il aurait pu être prévu de réaliser la liaison 5 fluidique entre cuve 4 et benne 3 sous forme d'une liaison souple ne nécessitant pas nécessairement une déconnexion et une interruption de ladite liaison 5 lors du déplacement à pivotement de la benne 3.

Ainsi, la liaison 5 fluidique entre cuve 4 et benne 3 peut être permanente ou temporaire.

Indépendamment de son mode de réalisation, cette liaison 5 fluidique entre benne 3 et cuve 4 formée par les moyens de liaison équipant le véhicule est une liaison obturable.

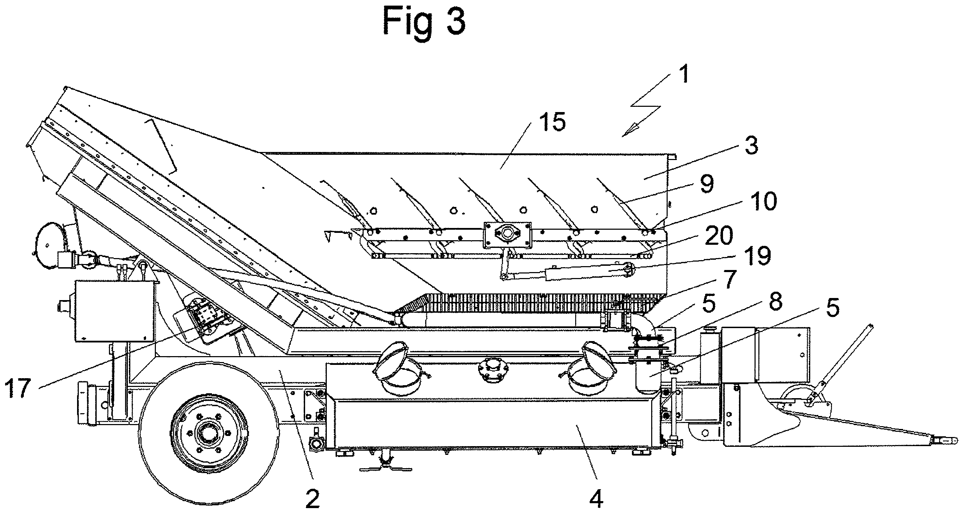

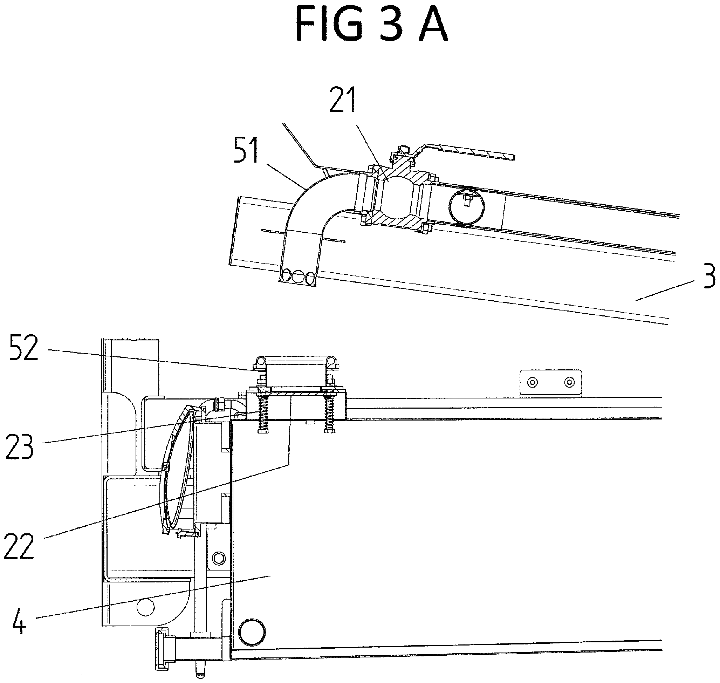

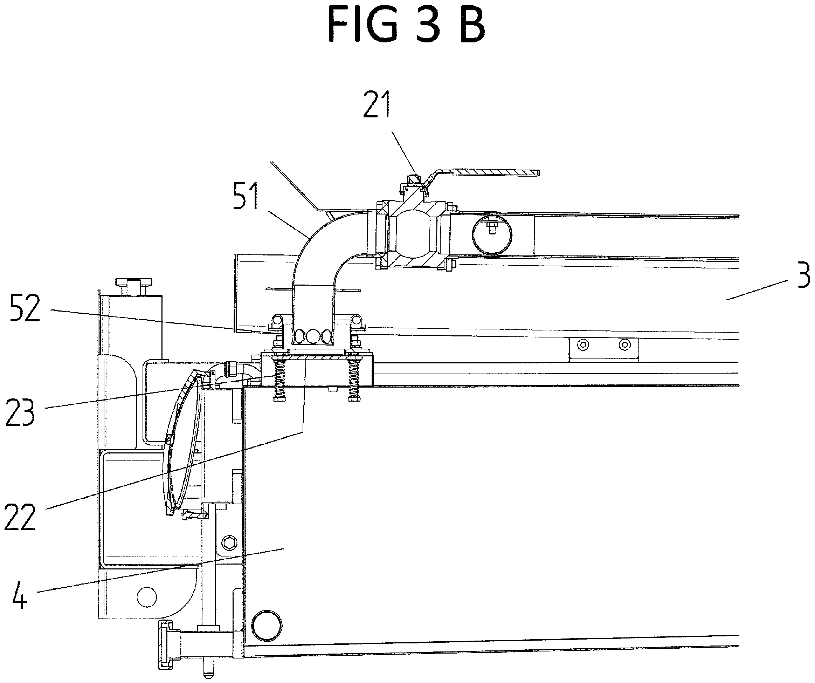

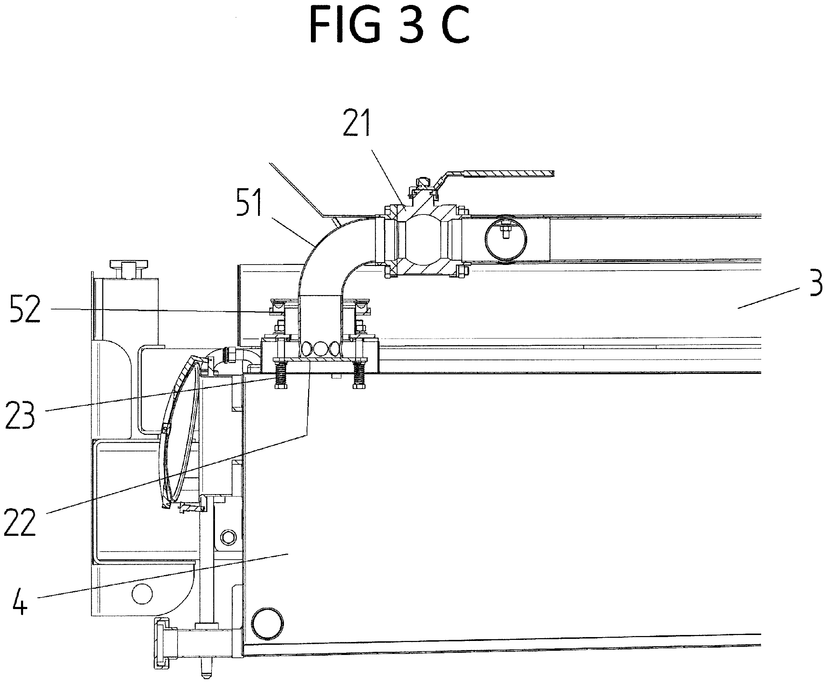

Cette liaison 5 fluidique obturable peut être munie d'un ou plusieurs organes d'obturation. Dans l'exemple représenté aux figures 3A à 3C, la liaison 5 fluidique obturable entre cuve 4 et benne 3 comprend un premier tronçon 51 de conduit solidaire en déplacement de la benne 3 et un deuxième tronçon 52 de conduit porté par la cuve 4. Le premier tronçon 51 de conduit est configuré pour s'insérer partiellement dans le deuxième tronçon 52 de conduit au moins en première position de stockage de charge de la benne 3 et un organe 22 d'obturation est disposé dans le deuxième tronçon 52 de conduit. Cet organe 22 d'obturation est équipé de moyens 23 de rappel en position fermée et est configuré pour passer de la position fermée à la position ouverte sous l'action d'une poussée exercée par le premier tronçon 51 de conduit à l'état partiellement introduit du premier tronçon 51 de conduit dans le deuxième tronçon 52 de conduit. Ainsi, cet organe 22 d'obturation de la liaison 5 fluidique est un organe mobile configuré pour passer d'une position correspondant à une position d'ouverture de la liaison 5 fluidique à une position correspondant à une position de fermeture de la liaison 5 fluidique en parallèle du passage de la benne 3 basculante de la première position de stockage de charge à la deuxième position de vidage de charge. Cette liaison 5 fluidique comprend un autre organe 21 d'obturation disposé sur le premier tronçon 51 du conduit solidaire en déplacement de la benne 3. Cet organe 21 d'obturation est formé par une simple vanne à actionnement manuel. Ainsi, lors du passage de la benne de la première position de stockage de charge à la deuxième position de vidange de charge, le deuxième tronçon 52 de conduit est automatiquement obturé, l'organe 22 d'obturation de ce deuxième tronçon chargé par ressort étant rappelé en position fermée en l'absence du premier tronçon 51 de conduit. Le premier tronçon 51 de conduit doit quant à lui être obturé par actionnement manuel ou automatique de l'organe 21 d'obturation. En position de vidage de charge de la benne, la liaison 5 fluidique est donc interrompue avant d'être rétablie en position de stockage de charge de la benne 3.

Chaque cuve 4 comporte encore une ouverture supplémentaire indépendante de son entrée/sortie formée au niveau de la zone de raccordement de la cuve 4 à la benne 3 par la liaison 5 fluidique. En effet, il est possible de vidanger chaque cuve 4 directement au niveau de sa liaison fluidique lorsque celle-ci est interrompue, c'est-à-dire à l'état déconnecté de la benne.

Il peut être parfois plus simple de prévoir de vidanger la cuve 4 à l'aide d'une autre ouverture équipant ladite cuve 4.

Lorsque les véhicules sont équipés de plusieurs cuves, les cuves peuvent être raccordées à un circuit de vidange commun.

Le montage des cuves 4 sur le châssis 2 de manière complètement indépendante de la benne 3 permet donc d'entraîner en basculement la benne 3 pour la vidange de celle-ci, sans entraîner en déplacement la ou les cuves 4.

Les cuves 4 peuvent ainsi être de plus grande capacité, car elles ne sont pas solidaires en déplacement de la benne 3.

Ainsi, dans le cas d'un véhicule équipé d'une seule cuve, le volume total de stockage de liquide correspondant au volume de liquide apte à être stocké à l'aide de la cuve équipant le châssis roulant est compris entre 15 % du volume intérieur total de la benne et le volume intérieur total de la benne 3.

Dans le cas d'un véhicule équipé de plusieurs cuves, le volume total de stockage de liquide correspondant au volume de liquide apte à être stocké à l'aide de la pluralité de cuves 4 équipant le châssis 2 roulant est compris entre 15 % du volume intérieur total de la benne et le volume intérieur total de la benne.

Dans l'exemple représenté, le volume intérieur de la benne est égal à 3000 litres, tandis que le volume intérieur total représenté par la pluralité de cuves est égal à 500 litres.

Pour permettre une vidange des jus dans les cuves, le fond 6 de la benne 3 est muni d'organes 7 de drainage. Ces organes 7 de drainage forment une zone de transit obligatoire du contenu de la benne 3 avant accès à la ou les liaisons 5 fluidiques benne 3/cuve 4.

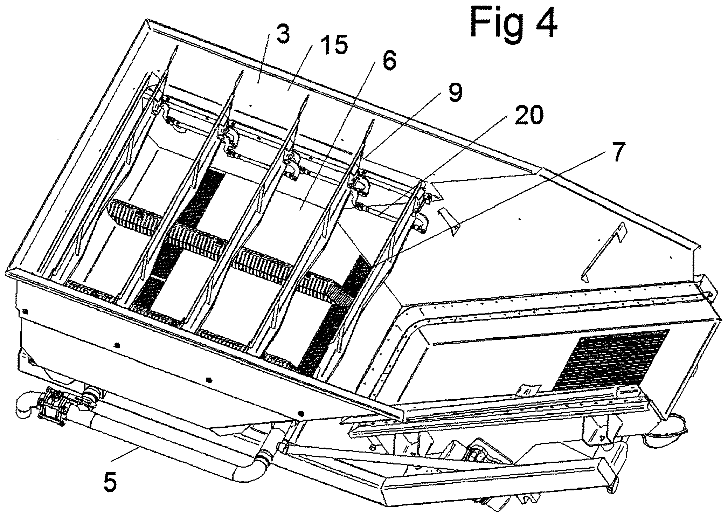

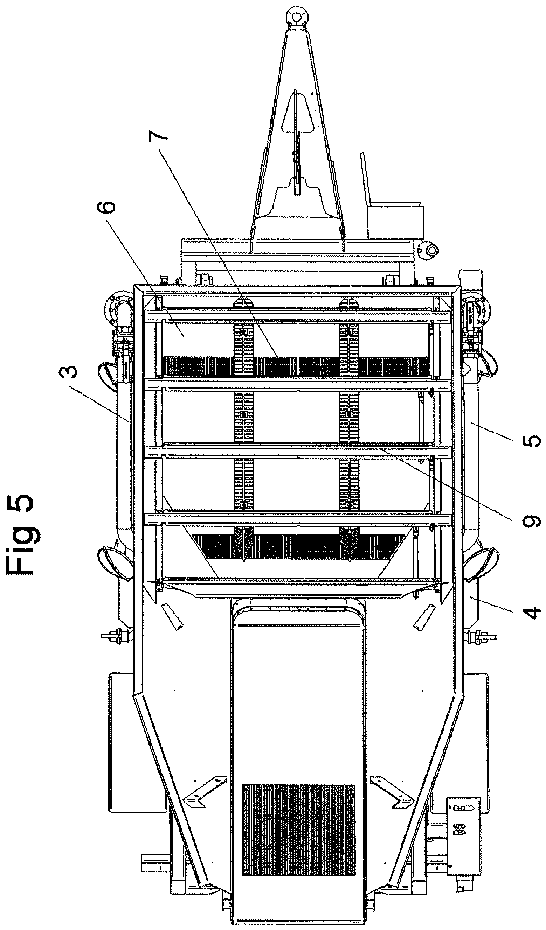

Ces organes 7 de drainage sont plus particulièrement visibles aux figures 4 et 5. Ces organes 7 de drainage sont ici réalisés sous forme de conduits à paroi périphérique munis d'ajours. Ces organes 7 de drainage comprennent, dans l'exemple représenté, deux drains longitudinaux et deux drains transversaux. Les deux drains transversaux sont logés à l'intérieur de gouttières ménagées dans le fond de la cuve 4. Ces drains ferment le dessus de ces gouttières, dont le contenu peut être amené, via la liaison 5 fluidique, telle que décrite ci-dessus, à une cuve. Ainsi, par exemple, l'une des gouttières alimente une cuve, et l'autre gouttière l'autre cuve.

Il est prévu en complément, deux drains longitudinaux qui reposent sur le fond de la benne. Le contenu de ces drains est dirigé vers les drains transversaux, drains longitudinaux et transversaux se croisant ici à angle droit.

Pour parfaire l'ensemble, la benne 3 est munie intérieurement d'au moins une série de volets 9. Dans l'exemple représenté, la benne 3 ne comporte qu'une série de volets, mais elle pourrait comporter plusieurs séries de volets, les volets d'une série étant disposés au-dessus des volets d'une autre série, pour former un étage supplémentaire.

En effet, les volets 9 d'une série sont montés à pivotement autour d'axes parallèles dits horizontaux, s'étendant sensiblement parallèlement au plan d'appui au sol du châssis. Par sensiblement parallèlement, on entend à ± 15° près.

Lors de leur entraînement en déplacement à pivotement, ces volets 9 sont aptes à passer d'une position fermée dans laquelle ils forment un plancher disposé au-dessus du fond 6 de la benne 3 et divisent au moins une partie du volume intérieur de la benne 3 en un compartiment inférieur et un compartiment supérieur, à une position ouverte dans laquelle l'accès à la partie du fond 6 de la benne surmontée par les volets 9 est autorisé.

Pour permettre l'entraînement simultané à pivotement des volets d'une série de volets, les axes pivots d'entraînement en déplacement desdits volets sont reliés entre eux par un jeu de biellettes. Un actionneur 19, tel qu'un vérin, entraîne en déplacement l'axe pivot 10 d'un volet maître. Cet entraînement en déplacement à rotation est transmis par lesdites biellettes 20 aux autres axes 10.

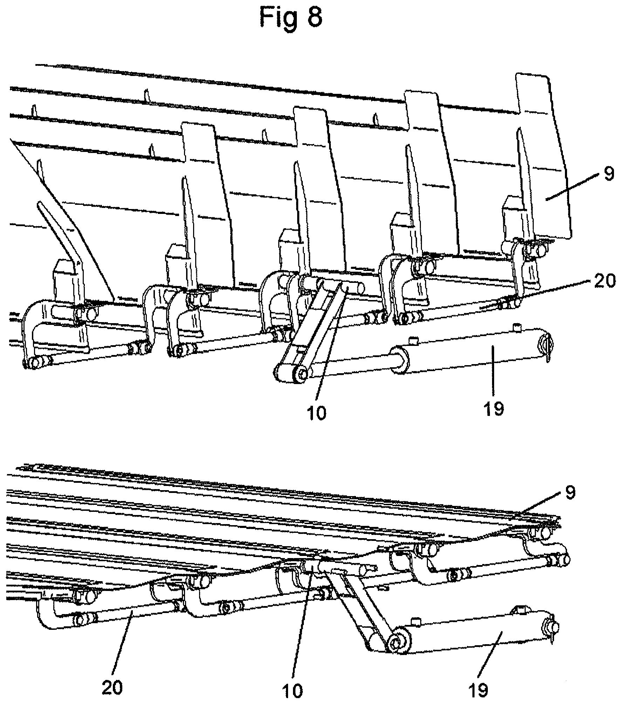

Un mode de réalisation des biellettes apte à permettre une telle transmission de mouvement est représenté à la figure 8.

Ces volets 9 sont encore munis d'une série d'ouvertures 11 traversantes, s'étendant en position fermée des volets 9 de préférence à l'aplomb d'un organe 7 de drainage tel que décrit ci-dessus. Ces ouvertures 11 permettent le passage des jus d'un étage à l'autre.

Dans l'exemple représenté à la figure 8, les volets 9 présentent une position ouverte dans laquelle les volets 9 s'étendent sur au moins deux tiers de leur hauteur au-dessus du plancher formé en position fermée desdits volets 9. Toutefois, ces volets 9 peuvent également présenter une position ouverte dans laquelle les volets s'étendent sur au moins deux tiers de leur hauteur au-dessous du plancher formé en position fermée desdits volets.

Dans cette seconde position ouverte, les volets peuvent être utilisés comme volets séparateurs, lorsque la vendange doit être collectée en lots.

Dans la position ouverte dans laquelle les volets s'étendent majoritairement au-dessus de leur axe pivot, ces volets peuvent être orientés de manière à agir à la manière de rampe inclinée ou de toboggan lors du chargement de la benne, pour éviter la formation de pyramides de vendange entre les volets et autoriser ainsi la vendange à accéder aux emplacements placés sous les volets.

Pour améliorer les conditions de stockage des jus dans les cuves, il peut être prévu un réservoir 12, un circuit 13 de circulation de fluide entre ledit réservoir 12 et les cuves 4 équipant le châssis roulant, et une pompe 14 apte à permettre le transfert du contenu du réservoir 12 dans les cuves 4 via ledit circuit 13 de circulation de fluide.

Le réservoir 12 et la pompe 14 sont portés directement par le châssis roulant.

Le réservoir 12 peut contenir un antioxydant et la pompe 14 peut être une pompe doseuse, telle qu'une pompe péristaltique, qui est programmée pour injecter, à des instants programmés, dans chaque cuve, ledit produit.

De même, pour améliorer les conditions de stockage de la vendange dans la benne, la benne peut être équipée d'injecteurs 16 de fluide. Ce fluide peut être un gaz, tel que du gaz carbonique ou un gaz réfrigérant, ou bien encore un liquide. Dans l'exemple représenté, ces injecteurs 16 de fluide sont disposés au niveau des parois 15 latérales longitudinales de la benne.

Dans le cas où la benne est équipée de volets 9 comme représenté, chaque injecteur est disposé de préférence à mi-distance entre les axes 10 pivots de deux volets 9 consécutifs de la série de volets 9.

Enfin, le véhicule peut être équipé, au niveau de la benne, à l'extérieur de la benne, et par exemple sous l'une des parois de la benne, de moyens 17 de vibration de la benne 3, tel qu'un système motorisé à balourds.

Le chargement de la benne d'un véhicule tel que décrit ci-dessus s'opère comme suit: en l'absence de volet 9, la vendange cueillie manuellement ou mécaniquement via une machine à vendanger est déversée directement dans la benne. Une fois déversée, les jus libres se déplacent vers le fond de la benne où ils pénètrent dans les drains qui les orientent vers les cuves.

En présence de volets 9 destinés à s'étendre au-dessus du plancher en position ouverte, le fonctionnement est le même, à l'exception du fait que le remplissage de la vendange s'opère dans un premier temps en position ouverte des volets, puis dans un second temps en position fermée des volets pour limiter l'épaisseur des couches formées.

Lorsque ces volets sont présents pour compartimenter verticalement le fond de la benne, l'opérateur doit prendre soin de déverser chaque lot de vendange dans le compartiment formé.

Pour le déchargement de la benne, on procède comme suit : si nécessaire, la liaison entre cuve et benne est déconnectée. La partie de liaison fluidique portée par la benne est fermée, pour éviter une poursuite d'un écoulement des jus lors de la vidange de la benne. La benne est alors surélevée, puis basculée, pour déverser le contenu de la benne. En parallèle, la partie de liaison fluidique portée par la ou chaque cuve est automatiquement fermée.

Les moyens 17 de vibration équipant la benne aident à l'avance de la matière dans la benne et à sa vidange. Ce déchargement de la benne 3 peut s'opérer en parallèle de la vidange des jus, ou non, la vidange des cuves pouvant s'opérer à tout moment de manière synchrone ou asynchrone avec le déchargement de la benne.

## Revendications

1. Véhicule (1) de transport de charge liquide/solide, notamment de vendange, comprenant un châssis (2) roulant et une benne (3) basculante portée par le châssis (2) roulant, ladite benne (3) étant une benne basculante entre deux positions extrêmes correspondant l'une, dite première position, à la position de stockage de charge de la benne (3), l'autre, dite deuxième position, à la position de vidage de charge de la benne (3),
**caractérisé en ce que** le châssis (2) roulant est équipé d'une ou plusieurs cuves (4) de récupération des liquides, **en ce que** la benne (3) est indépendante en déplacement à basculement de la ou les cuves (4) équipant le châssis (2) roulant, et **en ce que** le véhicule (1) comprend des moyens de liaison configurés pour permettre le raccordement de la, ou d'au moins l'une, de préférence de chaque, cuve (4) équipant le châssis (2) roulant à la benne (3) par une liaison (5) fluidique au moins en première position de stockage de charge de la benne (3).

2. Véhicule (1) de transport de charge liquide/solide selon la revendication 1, **caractérisé en ce que** le fond (6) de la benne (3) est muni d'au moins un organe (7) de drainage ou de filtration formant une zone de transit obligatoire du contenu de la benne (3) avant accès à la ou au moins l'une des liaisons (5) fluidiques benne (3)/cuve (4).

3. Véhicule (1) de transport de charge liquide/solide selon l'une des revendications précédentes,
**caractérisé en ce que** la ou au moins l'une des liaisons (5) fluidique entre cuve (4) et benne (3) est une liaison souple et/ou muni d'un raccord (8) apte à permettre une déconnexion de la benne (3) de la ou des cuves (4).

4. Véhicule (1) de transport de charge liquide/solide selon l'une des revendications précédentes,
**caractérisé en ce que** la ou au moins l'une des liaisons (5) fluidiques entre cuve (4) et benne (3) est une liaison obturable munie d'au moins un organe (21, 22) d'obturation et **en ce que** le ou au moins l'un des organes (21, 22) d'obturation de la liaison (5) fluidique est un organe mobile configuré pour passer d'une position correspondant à une position d'ouverture de la liaison (5) fluidique à une position correspondant à une position de fermeture de la liaison (5) fluidique en parallèle du passage de la benne (3) basculante de la première position de stockage de charge à la deuxième position de vidage de charge.

5. Véhicule (1) de transport de charge liquide/solide selon la revendication 4, **caractérisé en ce que** la ou au moins l'une des liaisons (5) fluidiques obturables entre cuve (4) et benne (3) comprend un premier tronçon (51) de conduit solidaire en déplacement de la benne (3) et un deuxième tronçon (52) de conduit porté par la cuve (4), **en ce que** le premier tronçon (51) de conduit est configuré pour s'insérer partiellement dans le deuxième tronçon (52) de conduit au moins en première position de stockage de charge de la benne (3) et
**en ce que** l'organe (21) d'obturation ou au moins l'un des organes (21, 22) d'obturation de la liaison (5) fluidique obturable est disposé dans le deuxième tronçon (52) de conduit, cet organe (22) d'obturation étant équipé de moyens (23) de rappel en position fermée et étant configuré pour passer de la position fermée à la position ouverte sous l'action d'une poussée exercée par le premier tronçon (51) de conduit à l'état partiellement introduit du premier tronçon (51) de conduit dans le deuxième tronçon (52) de conduit.

6. Véhicule (1) de transport de charge liquide/solide selon l'une des revendications précédentes, du type comprenant une cuve (4) équipant le châssis (2) roulant,
**caractérisé en ce que** le volume total de stockage de liquide correspondant au volume de liquide apte à être stocké à l'aide de la cuve (4) équipant le châssis (2) roulant est compris entre 15 % du volume intérieur total de la benne (3) et le volume intérieur total de la benne (3).

7. Véhicule (1) de transport de charge liquide/solide selon l'une des revendications 1 à 5, du type comprenant une pluralité de cuves (4),
**caractérisé en ce que** le volume total de stockage de liquide correspondant au volume de liquide apte à être stocké à l'aide de la pluralité de cuves (4) équipant le châssis (2) roulant est compris entre 15 % du volume intérieur total de la benne (3) et le volume intérieur total de la benne (3).

8. Véhicule (1) de transport de charge liquide/solide selon l'une des revendications précédentes,
**caractérisé en ce que** la benne (3) est munie intérieurement d'au moins une série de volets (9), lesdits volets (9) de la ou d'au moins l'une des séries de volets (9) étant montés à pivotement autour d'axes parallèles, dits horizontaux, entre une position fermée dans laquelle ils forment un plancher disposé au-dessus du fond (6) de la benne (3) et divisent au moins une partie du volume intérieur de la benne (3) en un compartiment inférieur et un compartiment supérieur et au moins une position ouverte dans laquelle l'accès à la partie du fond (6) de la benne surmontée par les volets (9) est autorisée.

9. Véhicule (1) de transport de charge liquide/solide selon la revendication 8 prise en combinaison avec la revendication 2,
**caractérisé en ce que** les volets (9) sont munis d'au moins une ouverture (11) traversante s'étendant en position fermée des volets (9) de préférence à l'aplomb d'un organe (7) de drainage ou de filtration.

10. Véhicule (1) de transport de charge liquide/solide selon l'une des revendications 8 ou 9,
**caractérisé en ce que** les volets (9) présentent une position ouverte dans laquelle les volets s'étendent, sur au moins 2/3 de leur hauteur, au-dessus du plancher formé en position fermée desdits volets (9).

11. Véhicule (1) de transport de charge liquide/solide selon l'une des revendications 8 à 10,
**caractérisé en ce que** les volets présentent une position ouverte dans laquelle les volets s'étendent, sur au moins 2/3 de leur hauteur, au-dessous du plancher formé en position fermée desdits volets (9).

12. Véhicule (1) de transport de charge liquide/solide selon l'une des revendications précédentes,
**caractérisé en ce qu'**il comprend un réservoir (12), un circuit (13) de circulation de fluide entre ledit réservoir (12) et la ou au moins l'une des cuves (4) équipant le châssis (2) roulant et une pompe (14) apte à permettre le transfert du contenu du réservoir (12) dans la ou au moins l'une des cuves (4) via ledit circuit (13) de circulation de fluide.

13. Véhicule (1) de transport de charge liquide/solide selon l'une des revendications précédentes,
**caractérisé en ce que** la benne (3), qui comprend des parois (15) latérales jouxtant le fond (6) de la benne (3), est équipée d'injecteurs (16) de fluide, tels que du gaz carbonique, chaque injecteur (16) étant disposé au niveau d'une paroi (15) latérale de la benne.

14. Véhicule (1) de transport de charge liquide/solide selon l'une des revendications précédentes,
**caractérisé en ce qu'**il est équipé de moyens (17) de vibration de la benne (3).

15. Véhicule (1) de transport de charge liquide/solide selon l'une des revendications précédentes,
**caractérisé en ce que** la ou au moins l'une, de préférence chaque liaison (5) fluidique entre cuve (4) et benne (3) est configurée pour permettre un écoulement gravitaire entre benne (3) et cuve (4).

## Patentansprüche

1. Transportfahrzeug (1) für flüssige/feste Ladung, insbesondere Lesegut, umfassend ein rollendes Fahrgestell (2) und einen Kippmulde (3), die vom rollenden Fahrgestell (2) getragen wird, wobei der Mulde (3) eine Mulde ist, der zwischen zwei extremen Positionen kippt, von denen eine, bezeichnet als erste Position, der Lagerposition der Ladung der Mulde (3) entspricht, die andere, bezeichnet als zweite Position, der Entleerungsposition der Ladung der Mulde (3) entspricht,
**dadurch gekennzeichnet dass** das rollendes Fahrgestell (2) mit einem oder mit mehreren Tanks (4) zur Rückgewinnung der Flüssigkeiten ausgestattet ist, dadurch, dass die Mulde (3) in der Kippverschiebung unabhängig von dem oder den Tanks (4) ist, die das rollende Fahrgestell (2) ausstatten, und dadurch, dass das Fahrzeug (1) Verbindungsmittel umfasst, die konfiguriert sind, um den Anschluss des oder mindestens eines, vorzugsweise jedes Tanks (4), der das rollende Fahrgestell (2) ausstattet, an die Mulde (3) durch eine fluidische Verbindung (5) mindestens in der ersten Lagerposition der Ladung der Mulde (3) zu ermöglichen.

2. Transportfahrzeug (1) für flüssige/feste Ladung nach Anspruch 1, **dadurch gekennzeichnet, dass** der Boden (6) der Mulde (3) mit mindestens einem Drainage- oder Filterorgan (7) versehen ist, das einen obligatorischen Transitbereich des Inhalts der Mulde (3) vor dem Zugang zu der oder mindestens einer der fluidischen Verbindungen (5) zwischen der Mulde (3)/demTank (4) bildet.

3. Transportfahrzeug (1) fürflüssige/feste Ladung nach einem der vorhergehenden Ansprüche 1, **dadurch gekennzeichnet, dass** die oder mindestens eine der fluidischen Verbindungen (5) zwischen dem Tank (4) und der Mulde (3) eine flexible Verbindung ist und/oder mit einem Anschluss (8) versehen ist, der dazu in der Lage ist, die Trennung der Mulde (3) von dem oder den Tanks (4) zu ermöglichen.

4. Transportfahrzeug (1)fürflüssige/feste Ladung nach einem der vorhergehenden Ansprüche 1, **dadurch gekennzeichnet, dass** die oder mindestens die eine der fluidischen Verbindungen (5) zwischen dem Tank (4) und der Mulde (3) eine verschließbare Verbindung ist, die mit mindestens einem Verschlussorgan (21, 22) versehen ist, und dadurch, dass das oder mindestens das eine der Verschlussorgane (21, 22) der fluidischen Verbindung (5) ein bewegliches Organ ist, das konfiguriert ist, um von einer Position, die einer Öffnungsposition der fluidsichen Verbindung (5) entspricht, in eine Position überzugehen, die einer Verschlussposition der fluidischen Verbindung (5) entspricht, parallel zum Übergang der Kippmulde (3) von der ersten Lagerposition der Ladung in die zweite Entleerungsposition der Ladung.

5. Transportfahrzeug (1) für flüssige/feste Ladung nach Anspruch 4, **dadurch gekennzeichnet, dass** die oder mindestens eine der fluidischen Verbindungen (5), die zwischen dem Tank (4) und der Mulde (3) verschließbar ist, einen ersten Leitungsabschnitt (51) umfasst, der in der Verschiebung fest mit der Mulde (3) verbunden ist, und einen zweiten Leitungsabschnitt (52), der vom Tank (4) getragen wird, und dadurch, dass der erste Leitungsabschnitt (51) konfiguriert ist, um teilweise in den zweiten Leitungsabschnitt (52) mindestens in der ersten Lagerposition der Ladung der Mulde (3) eingeführt zu werden, und dadurch, dass das Verschlussorgan (21) oder mindestens eines der Verschlussorgane (21, 22) zur verschließbaren fluidischen Verbindung (5) im zweiten Leitungsabschnitt (52) angeordnet ist, wobei dieses Verschlussorgan (22) mit Rückstellmitteln (23) in die geschlossene Position ausgestattet und konfiguriert ist, um von der geschlossenen Position in die offene Position unter der Einwirkung eines Drucks überzugehen, der vom ersten Leitungsabschnitt (51) im teilweise in den zweiten Leitungsabschnitt (52) eingeführten Zustand des ersten Leitungsbschnitts (51) ausgeführt wird.

6. Transportfahrzeug (1) fürflüssige/feste Ladung nach einem der vorhergehenden Ansprüche vom Typ umfassend einen Tank (4), der das rollende Fahrgestell (2) ausstattet, **dadurch gekennzeichnet, dass** das Gesamtvolumen der Lagerung von Flüssigkeit, das dem Volumen von Flüssigkeit entspricht, die ausgelegt ist, um mit Hilfe des Tanks (4) gelagert zu werden, der das rollende Fahrgestell (2) ausstattet, zwischen 15 % des gesamten Innenvolumens der Mulde (3) und dem gesamten Innenvolumen der Mulde (3) liegt.

7. Transportfahrzeug (1) für flüssige/feste Ladung nach einem der Ansprüche 1 bis 5, vom Typ umfassend eine Vielzahl von Tanks (4), **dadurch gekennzeichnet, dass** das Gesamtvolumen der Lagerung von Flüssigkeit, das dem Volumen von Flüssigkeit entspricht, das ausgelegt ist, um mit Hilfe der Vielzahl von Tanks (4) gelagert zu werden, die das rollende Fahrgestell (2) ausstatten, zwischen 15 % des gesamten Innenvolumens der Mulde (3) und dem gesamten Innenvolumen der Mulde (3) liegt.

8. Transportfahrzeug (1) fürflüssige/feste Ladung nach einem der vorhergehenden Ansprüche, **dadurch gekennzeichnet, dass** die Mulde (3) im Inneren mit mindestens einer Reihe von Klappen (9) versehen ist, wobei die Klappen (9) der oder mindestens einer der Reihen von Klappen (9) kippend um parallele Achsen, bezeichnet als horizontal, zwischen einer geschlossenen Position, in der sie eine Platte bilden, die über dem Boden (6) der Mulde (3) angeordnet ist, und mindestens einen Teil des inneren Volumens der Mulde (3) in ein unteres Abteil und ein oberes Abteil teilen, und mindestens eine offene Position montiert sind, in der der Zugang zum Teil des Bodens (6) der Mulde überlagert von den Klappen (9) ermöglicht ist.

9. Transportfahrzeug (1) für flüssige/feste Ladung nach Anspruch 8 in Kombination mit Anspruch 2, **dadurch gekennzeichnet, dass** die Klappen (9) mit mindestens einer Queröffnung (11) versehen sind, die sich in der geschlossenen Position der Klappen (9) vorzugsweise senkrecht zu einem Drainage- oder Filterorgan (7) erstreckt.

10. Transportfahrzeug (1) für flüssige/feste Ladung nach einem der Ansprüche 8 oder 9, **dadurch gekennzeichnet, dass** die Klappen (9) eine offene Position aufweisen, in der sich die Klappen, auf mindestens 2/3 ihrer Höhe, über dem Boden erstrecken, der in der geschlossenen Position der Klappen (9) gebildet ist.

11. Transportfahrzeug (1) für flüssige/feste Ladung nach einem der Ansprüche 8 bis 10, **dadurch gekennzeichnet, dass** die Klappen eine offene Position aufweisen, in der sich die Klappen, auf mindestens 2/3 ihrer Höhe, unter dem Boden erstrecken, der in der geschlossenen Position der der Klappen (9) gebildet ist.

12. Transportfahrzeug (1) für flüssige/feste Ladung nach einem der vorhergehenden Ansprüche, **dadurch gekennzeichnet, dass** es einen Behälter (12), einen Kreislauf (13) zur Zirkulierung von Fluid zwischen dem Behälter (12) und dem oder mindestens einem der Tanks (4) umfasst, die das rollende Fahrgestell (2) ausstatten, und eine Pumpe (14) umfasst, die ausgelegt ist, um die Übertragung des Inhalts des Behälters (12) in einer oder mindestens eine der Mulden (4) über den Kreislauf (13) zum Zirkulieren von Fluid zu ermöglichen.

13. Transportfahrzeug (1) für flüssige/feste Ladung nach einem der vorhergehenden Ansprüche 1, **dadurch gekennzeichnet, dass** die Mulde (3), die seitliche Wände (15) neben dem Boden (6) der Mulde (3) umfasst, mit Injektoren (16) von Fluid wie z. B. Kohlendioxid ausgestattet ist, wobei jeder Injektor (16) auf der Ebene einer seitlichen Wand (15) der Mulde angeordnet ist.

14. Transportfahrzeug (1) für flüssige/feste Ladung nach einem der vorhergehenden Ansprüche, **dadurch gekennzeichnet, dass** es mit Mitteln (17) zur Vibration der Mulde (3) ausgestattet ist.

15. Transportfahrzeug (1) für flüssige/feste Ladung nach einem der vorhergehenden Ansprüche, **dadurch gekennzeichnet, dass** die oder mindestens die eine, vorzugsweise jede fluidische Verbindung (5) zwischen dem Tank (4) und der Mulde (3) konfiguriert ist, um ein Ablaufen aufgrund der Schwerkraft zwischen der Mulde (3) und dem Tank (4) zu ermöglichen.

## Claims

1. A vehicle (1) for transporting a liquid/solid load, in particular grapes, comprising a rolling chassis (2) and a tilting bucket (3) carried by the rolling chassis (2), said bucket (3) being a bucket tilting between two extreme positions, one, called first position, corresponding to the load storage position of the bucket (3), the other, called second position, corresponding to the load emptying position of the bucket (3),
**characterized in that** the rolling chassis (2) is equipped with one or several liquid recovery tanks (4), **in that** the bucket (3) is independent in tilting movement from the tank(s) (4) equipping the rolling chassis (2), and **in that** the vehicle (1) comprises connecting means configured to allow the connection of the, or at least one of the, preferably each, tank(s) (4) equipping the rolling chassis (2) to the bucket (3) by a fluid connection (5) at least in the first load storage position of the bucket (3).

2. The liquid/solid load transport vehicle according to claim 1,
**characterized in that** the bottom (6) of the bucket (3) is provided with at least one drainage or filtration member (7) forming a mandatory transit zone for the contents of the bucket (3) before access to the or at least one of the bucket (3)/tank (4) fluid connections (5).

3. The liquid/solid load transport vehicle (1) according to one of the preceding claims, **characterized in that** the or at least one of the fluid connections (5) between tank (4) and bucket (3) is a flexible connection and/or provided with a coupling (8) capable of allowing a disconnection of the bucket (3) from the tank(s) (4).

4. The liquid/solid load transport vehicle (1) according to one of the preceding claims, **characterized in that** the or at least one of the fluid connections (5) between tank (4) and bucket (3) is a closable connection provided with at least one closing member (21, 22) and **in that** the or at least one of the closing members (21, 22) of the fluid connection (5) is a moving member configured to go from a position corresponding to an open position of the fluid connection (5) to a position corresponding to a closed position of the fluid connection (5) in parallel with the passage of the tilting bucket (3) from the first load storage position to the second load emptying position.

5. The liquid/solid load transport vehicle (1) according to claim 4,
**characterized in that** the or at least one of the closable fluid connections (5) between tank (4) and bucket (3) comprises a first pipe segment (51) secured in movement with the bucket (3) and a second pipe segment (52) carried by the tank (4), **in that** the first pipe segment (51) is configured to be partially inserted into the second pipe segment (52) at least in the first load storage position of the bucket (3) and
**in that** the closing member (21) or at least one of the closing members (21, 22) of the closable fluid connection (5) is arranged in the second pipe segment (52), this closing member (22) being equipped with return means (23) to the closed position and being configured to go from the closed position to the open position under the action of thrust exerted by the first pipe segment (51) in the partially inserted state of the first pipe segment into the second pipe segment (52).

6. The liquid/solid load transport vehicle (1) according to one of the preceding claims, of the type comprising a tank (4) equipping the rolling chassis (2),
**characterized in that** the total liquid storage volume corresponding to the liquid volume able to be stored using the tank (4) equipping the rolling chassis (2) is between 15% of the total interior volume of the bucket (3) and the total interior volume of the bucket (3).

7. The liquid/solid load transport vehicle (1) according to one of claims 1 to 5, of the type comprising a plurality of tanks (4),
**characterized in that** the total liquid storage volume corresponding to the volume of liquid able to be stored using the plurality of tanks (4) equipping the rolling chassis (2) is between 15% of the total interior volume of the bucket (3) and the total interior volume of the bucket (3).

8. The liquid/solid load transport vehicle (1) according to one of the preceding claims, **characterized in that** the bucket (3) is inwardly provided with at least one series of flaps (9), said flaps (9) of the or at least one of the series of flaps (9) being mounted pivoting around parallel axes, called horizontal, between a closed position in which they form a floor arranged above the bottom (6) of the bucket (3) and dividing at least part of the interior volume of the bucket (3) into a lower compartment and an upper compartment, and at least one open position in which the access to the part of the bottom (6) of the bucket topped by the flaps (9) is allowed.

9. The liquid/solid load transport vehicle (1) according to claim 8 combined with claim 2,
**characterized in that** the flaps (9) are provided with at least one through opening (11) extending in the closed position of the flaps (9) preferably over a drainage or filtration member (7).

10. The liquid/solid load transport vehicle (1) according to one of claims 8 or 9,
**characterized in that** the flaps (9) have an open position in which the flaps extend, over at least 2/3 of their height, above the floor formed in the closed position of said flaps (9).

11. The liquid/solid load transport vehicle (1) according to one of claims 8 to 10,
**characterized in that** the flaps have an open position in which the flaps extend, over at least 2/3 of their height, below the floor formed in the closed position of said flaps (9).

12. The liquid/solid load transport vehicle (1) according to one of the preceding claims,
**characterized in that** it comprises a reservoir (12), a fluid circulation circuit (13) between said reservoir (12) and the or at least one of the tanks (4) equipping the rolling chassis (2) and a pump (14) capable of allowing the transfer of the contents of the reservoir (12) in the or at least one of the tanks (4) via said fluid circulation circuit (13).

13. The liquid/solid load transport vehicle (1) according to one of the preceding claims,
**characterized in that** the bucket (3), which comprises side walls (15) adjoining the bottom (6) of the bucket (3), is equipped with injectors (16) for fluid, such as carbon dioxide, each injector (16) being arranged at a side wall (15) of the bucket.

14. The liquid/solid load transport vehicle (1) according to one of the preceding claims,
**characterized in that** it is equipped with means (17) for vibrating the bucket (3).

15. The liquid/solid load transport vehicle (1) according to one of the preceding claims,
**characterized in that** the or at least one, preferably each fluid connection (5) between tank (4) and bucket (3) is configured to allow a gravitational flow between bucket (3) and tank (4).
